# EUROPEAN PATENT SPECIFICATION

(11) **EP 0 515 889 B1**
(45) Date of publication and mention of the grant of the patent: **16.10.1996**
(21) Application number: 92107921.6
(22) Date of filing: 12.05.1992
(51) Int. Cl.: B65H 37/00, B65H 18/28, B65H 23/32, B32B 31/00

(54) **Method and device for inserting an edge strip between two linings coated on either side of strip material**
Verfahren und Vorrichtung zum Einfügen eines Randstreifens zwischen zwei beidseitig beschichtete streifenförmige Folienbahnen
Procédé et appareil pour l'insertion d'une bande entre les bords de deux films revêtus de chaque côté

(30) Priority: 14.05.1991 SE 9101449
(43) Date of publication of application: 02.12.1992
(73) Proprietor: ASEA BROWN BOVERI AB, 721 83 Västeras (SE)
(72) Inventor: Eriksson, Lars, S-791 45 Falun (SE)
(74) Representative: Boecker, Joachim, Dr.-Ing.

(56) References cited:
- FR-A- 2 103 423
- FR-A- 2 459 179
- SE-B- 466 742
- US-A- 3 548 783
- US-A- 4 602 975

## Description

The invention relates to a method for inserting an edge strip between two linings coated on either side of strip material according to the precharacterising part of claim 1. The invention also relates to a device for carrying out the method.

In certain applications where strip material is included it is required that the strip material is provided with a lining on one or on both sides which is normally thin in relation to the thickness of the strip material. The application of these linings often takes place in special coating machines, the configuration of which is determined by what kind of strip is to be coated and by the consistence and shape of the strip.

The manufacture of strip is performed in special strip rolling mills, foil mills, paper and cardboard manufacturing machines, etc., which are designed taking into account the material properties of the strip, the width, the thickness, the winding speed, etc. Characteristic of most of the strip-manufacturing tools and machines is, however, that the finished strip is led to a wind-up reel where the strip is wound up into a coil.

The linings with which strip in certain applications, or for various reasons, have to be provided may have different insulating, sealing or protective functions. During cold rolling of strip, for example, a thin layer of paper is placed on one side of the strip before the winding up starts in order to protect the strip against scratches or other damage. Within the packing industry it is very common to coat both aluminium foil and thick paper with a plastic lining, for example for use as packaging for soft drinks, milk, etc. In this connection, linings may either be positioned loosely on the strip in question or be more or less secured thereto.

There are also applications where it is desirable for the width of the linings to be wider than the strip, that is, the side edges of the linings shall extend outside the edges of the strip. In such applications, it is also common for linings to be applied on both sides of the strip.

In connection with the afore-mentioned coating, problems of various kinds arise. To explain why the problems arise, a short and schematic description will first be given of a coating method with a coating machine which applies linings on both sides of the strip. In addition to the above-mentioned strip wind-off reel, wind-up reel, intermediate rolls and coating strip wind-off reels, such a coating machine also comprises two deflector rolls.

After the coil with the strip to be coated has been placed on the strip wind-off reel, the strip is passed over the intermediate rolls to the wind-up reel. The coating strips, which arrive from respective wind-off reels placed on respective sides of the strip, are each pressed against a respective side of the strip by the above-mentioned deflector rolls. After the deflector rolls both linings and strip will be passed over the following rolls. Upon passage over these rolls, depending on the direction of rotation of the rolls, first one of the linings and then the other lining will make contact with the periphery of some roll. Because of the stresses which then arise in the linings, undesired formation of wrinkles may arise in the linings. SE-A-466 742, which had not yet been published at the priority date of this patent, describes one method which, with the aid of a roll filling strip, prevents the occurrence of these wrinkles.

To obtain a coil as homogeneous and compact as possible, it is necessary that the space which is formed outside the strip and between the linings of the finished coil be filled in some way. This is suitably done by the introduction of a so-called edge filling strip. This is made of strips of thin paper or similar material, which are narrow in relation to the strip. To adapt to the thickness of the strip, it may by necessary for the edge filling strip to consist of strips positioned one above the other. In the same way as the strip and the linings, the strips of paper or similar material are also wound in the form of coils on wind-off reels. However, it has proved relatively difficult to insert the edge strips between the two linings and to cause the edge strips to be positioned such that, during the coating process and in an as-wound coil, they have a plane and straight orientation in relation to both the strip and the outer edges of the linings.

The FR-A-2 103 423 discloses the insertion of a thermoplastic band between two parallel bands of strip material which are to be glued together by heating. In order to insert the thermoplastic band between the two parallel bands the thermoplastic band is supplied in a direction perpendicular to the moving direction of the two parallel bands, is then introduced between the two bands and thereafter turned by 90 degrees in order to comply with a moving direction of the two parallel bands. In order to make the thermoplastic band to travel along such a path a special device is used which is to be inserted between the two parallel bands. However, the document does not disclose the nature and construction of this device, but simply states that it is already known.

The document US-A-3 548 783 discloses a device which allows moving strip material to be transferred simultaneously into another plane and into another direction of movement. The device consists of a hollow curved channel part that follows a curved path from one plane into the other plane thereby changing direction at the same time. This curved channel part is a complicated and difficult to manufacture component. Due to its curved shape it is unable to be manufactured without a minimum in difference between the two afore-mentioned planes.

The invention aims at developing a method for inserting an edge strip between two linings coated on either broad side of strip material which method ensures plane and accurate positioning of the edge strip in relation to the strip material and the outer edges of the linings and which method can be applied in connection with coating the linings onto the strip material.

To achieve this aim the invention suggests a method for inserting an edge strip between two linings coated on strip material according to the introductory part of claim 1, which is characterized by the features of the characterizing part of claim 1.

Further developments of the method are characterized by the features of the additional claims 2 and 3.

A device for carrying out the method according to the invention is characterized by the features of the additional claim 4.

The transport channel is so dimensioned that the edge strip may run freely, but still in a controlled and well guided manner, inside the channel, that is, that the inner width of the channel is insignificantly wider than the edge strip and that the height of the channel is insignificantly greater than the thickness of the edge strip. On one of the broad sides of the channel, a piece having the shape of a parallelogram is cut away, where one pair of parallel lines coincides with the longitudinal direction of the channel and the other pair of parallel lines has an inclination of 45 degrees relative to the longitudinal direction of the channel. Around a conceived line parallel to and located halfway between these 45-degree lines, the channel is bent through 180 degrees such that the parts of the channel extending from the bend are folded and make an angle of 90 degrees relative to each other in the longitudinal direction of the channel. The bending is suitable done in such a way that the 45-degree transition portion of the channel has along its edge the shape of half a circular cylinder. Because of the folding, the folded parts of the channel will be positioned on planes which differ somewhat from each other owing to the radius of the bending.

The method according to the invention is preferably applied in a coating machine where the linings are coated onto the strip material. The coating machine comprises, inter alia, a strip wind-off reel for the non-coated strip and a wind-up reel for the coated strip as well as a number of intermediate rolls. The method and the device according to the invention may be used in coating machines with linings on either one or both of the sides of the strip and where the linings are wider than the strip to be coated and where the linings are made from coating strips in the form of coils placed on coating strip wind-off reels between the strip wind-off reel of the coating machine and the wind-up reel.

Because the linings generally are relatively elastic, a wedge-shaped tool may be inserted between the outer edges of the linings, forcing the linings apart. This tool is placed between the last roll of the coating machine and the wind-up reel and as close to the wind-up reel as possible. The bent channel is then inserted into the gap which is thereby formed such that one channel end becomes parallel to the longitudinal direction of the linings. Now, as mentioned above, the width of the edge strip and hence also the width of the channel are dimensioned such that, if the outer edge of the channel is parallel to and substantially coincides with the outer edges of the linings, the space between the edge portions of the linings will be filled. The other end of the channel will now point at an angle of 90 degrees straight out from the linings.

By inserting the edge strip into the channel end which extends straight out from the linings, tilting the edge strip around the circular-cylindrical surface and then passing the edge strip into that part of the channel which runs parallel to the outer edges of the linings while at the same time ensuring that this channel end terminates just before the strip, the linings and the edge strip reach the wound-up coil, the edge strip will remain fixed in the correct position in the finished coil.

By way of example, the invention will now be described in greater detail with reference to the accompanying drawings showing in
- Figure 1: an unbent transport channel, prepared for bending and folding,
- Figure 2: a bent and folded transport channel,
- Figure 3: the end part of a coating machine with a partially wound-up coil and also how the bent and folded transport channel conducts edge strip in between two linings.

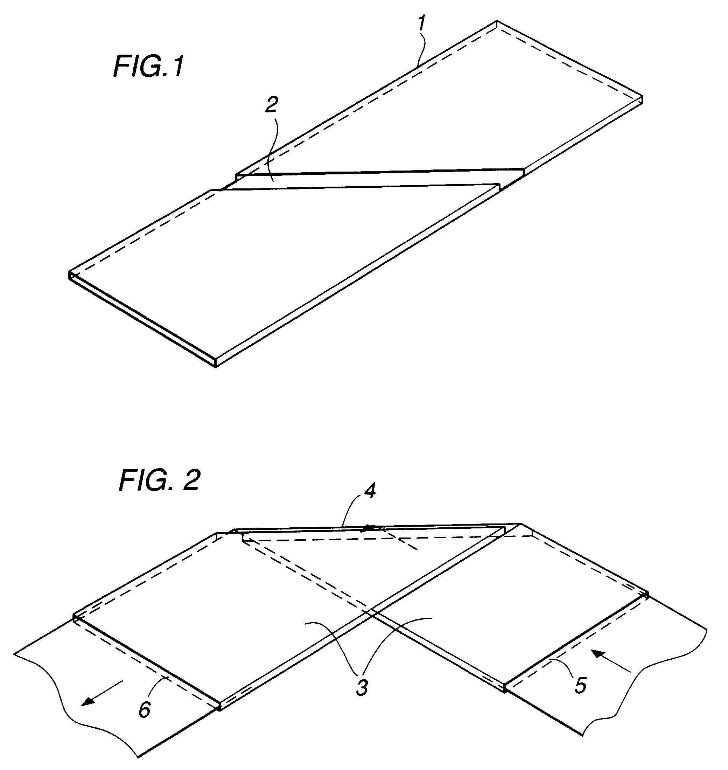

Figure 1 shows a flat unbent transport channel 1. The channel has been prepared for bending by cutting away a parallelogram-shaped piece 2 in the longitudinal centre of the channel. This parallelogram-shaped piece comprises the material of one broad side and of the two edge sides of the channel. On the affected broad side, one pair of parallel lines coincide with the longitudinal direction of the channel and the other pair of parallel lines have an inclination of 45 degrees relative to the longitudinal direction of the channel.

Figure 2 shows the appearance of the transport channel 3 after bending and folding. The strip 4 of the unaffected broad side wall of the channel is formed during the bending and folded into a semicircular-cylindrical shape by rotating the two channel parts of the transport channel by 180 degrees relative to each other. The two channel parts on each side of the bend and the fold thus form an angle of 90 degrees in relation to each other. The edge strip is intended to be inserted into a first orifice 5. When the edge strip arrives at the open part which is bent through 45 degrees, the edge strip is turned around this part and inserted into the second channel part which is bent through 90 degrees relative to the first channel part and then emerges at the other orifice 6 of the channel.

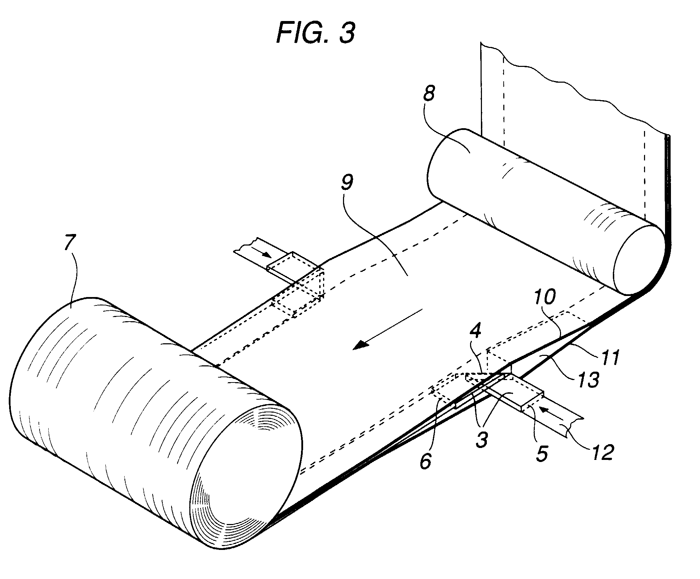

Figure 3 shows the end part of a coating machine with a partially wound-up coil 7. 8 is the last roll of the coating machine. Between the coil 7 and the roll 8 extends the strip 9 to be coated, and 10 and 11 indicate the two linings. As mentioned above, the edge strip 12 is passed into the transport channel at its first orifice 5, is turned around the part which is bent through 45 degrees and is then passed in parallel with the outer edge of the linings via the second orifice 6 to the adjacent positioned wound-up coil 7.

To be able to insert the transport channel with the edge strip between the outer edges of the two linings, the latter have to be moved apart at the edges. Since, as mentioned above, the linings are relatively resilient, the necessary opening between the linings for the transport channel may be provided by the insertion of a wedge-shaped tool 13 between the linings.

In the embodiment described above, the transport channel has been bent and folded such that the two halves form an angle of 90 degrees with each other. Within the scope of the invention, of course, the angle between the two halves may assume any value for the best possible adaptation to the coating machine in other respect. However, the minimum and maximum bending angles will in such case be determined by the available distance between the coil and the last roll. In the same way, the scope of the invention allows for the transport channel to be bent and folded at several locations in its longitudinal direction if this is considered suitable, and possibly allows for the use of several channels bent and folded once.

## Claims

1. Method for inserting an edge strip (12) between two linings (10, 11) coated on either broad side of strip material (9) with the linings extending beyond at least one side edge of the strip material (9),
- whereby the strip with the coated linings (10, 11) is pased between rolls and/or reels,
- the edge strip (12) is passed inside a bent and folded transport channel (3), a first bent part (3,6) of which is placed between the edge portions of the two linings (10, 11) and adjacent the coated strip with the longitudinal direction of said first bent part (3,6) coinciding with the longitudinal direction of the passing strip and linings,
- and a second bent part (3,5) of the transport channel is directed outwards from the edge of the linings.

2. Method according to claim 1, **characterized** in that said first bent part (3,6) of the transport channel is placed in the lateral direction such that the edge of the edge strip (12) facing the edge of the linings coincides with the edge of the linings.

3. Method according to claim 1 or 2, **characterized** in that the method is applied in a coating machine where the linings (10, 11) are coated onto the strip material (9) before the coated strip material (9) is wound up on a wind-up reel.

4. Device for carrying out the method according to any of the preceding claims, whereby
- the device is designed as a transport channel (3) inside of which the edge strip (12) is passed,
- the transport channel is bent and folded so as to form an angle between the edge strip (12) passed into the transport channel and the edge strip emerging from the transport channel,
- the transport channel is arranged such that a first bent part (3,6) thereof coincides with the longitudinal direction of the strip and the linings,
- and in the lateral direction the transport channel is preferably arranged such that the edge facing the edge of the lining coincides with the edge of the lining.

## Patentansprüche

1. Verfahren zur Einfügung eines Randstreifens (12) zwischen zwei Abdeckungen (10,11), die auf je einer breiten Seite eines Streifenmaterials (9) aufgebracht sind, wobei die Abdeckungen sich mindestens über einen Seitenrand des Streifenmaterials (9) erstrecken und wobei
- das Streifenmaterial mit den aufgebrachten Abdeckungen (10,11) zwischen Rollen und/oder Wickelrollen geführt wird,
- der Randstreifen (12) in einem gebogenen und gefalteten Transportkanal (3) geführt wird, von dem ein erster Teil (3,6) zwischen den Randabschnitten der beiden Abdeckungen (10,11) und neben dem beschichteten Streifenmaterial plaziert ist, wobei die Längsrichtung des genannten ersten abgebogenen Teils (6,3) mit der Längsrichtung des vorbeilaufenden Streifenmaterials und der vorbeilaufenden Abdeckungen zusammenfällt,
- und ein zweiter abgebogener Teil (3,5) des Transportkanals sich von dem Rand der Abdeckungen nach außen erstreckt.

2. Verfahren nach Anspruch 1, **dadurch gekennzeichnet**, daß der erste abgebogene Teil (3,6) des Transportkanals in seitlicher Richtung so plaziert ist, daß der Rand des Randstreifens (12), der dem Rand der Abdeckungen gegenüberliegt, mit dem Rand der Abdeckungen zusammenfällt.

3. Verfahren nach Anspruch 1 oder 2, **dadurch gekennzeichnet**, daß das Verfahren bei einer Beschichtungsmaschine angewendet wird, bei der die Abdeckungen (10,11) auf dem Streifenmaterial (9) aufgebracht werden, bevor das beschichtete Streifenmaterial (9) auf eine Aufwickelrolle aufgewickelt wird.

4. Vorrichtung zur Durchführung des Verfahrens nach einem der vorhergehenden Ansprüche, wobei
- die Vorrichtung als ein Transportkanal (3) ausgebildet ist, innerhalb dessen der Randstreifen (12) geführt wird,
- der Transportkanal so gebogen und gefaltet ist, daß er einen Winkel zwischen dem in dem Transportkanal eingeführten Randstreifen (12) und dem aus dem Transportkanal herauslaufenden Randstreifen bildet,
- der Transportkanal so angeordnet ist, daß ein erster abgebogener Teil (3,6) desselben mit der Längsrichtung des Streifenmaterials und der Abdeckungen zusammenfällt,
- und der Transportkanal in seitlicher Richtung vorzugsweise so angeordnet ist, daß der Rand, der dem Rand der Abdeckung gegenüberliegt, mit dem Rand der Abdeckung zusammenfällt.

## Revendications

1. Procédé pour d'insertion d'une bande de bordure (12) entre deux films (10, 11) appliqués de chaque côté plat d'un matériau en bande (9), les films s'étendant au-delà d'au moins un bord latéral du matériau en bande (9), dans lequel :
- la bande avec les films (10, 11) appliqués passe entre des rouleaux et/ou des cylindres,
- la bande de bordure (12) passe à l'intérieur d'un canal de transport (3) cintré et replié, une première partie cintrée (3,6) de celui-ci est placée entre les parties du bord des deux films (10, 11) et adjacent à la bande revêtue, la direction longitudinale de la première partie cintrée (3,6) coïncidant avec la direction longitudinale de la bande passante et des films, et
- une seconde partie cintrée (3,5) du canal de transport est dirigée vers l'extérieur à partir du bord des films.

2. Procédé suivant la revendication 1, caractérisé en ce que la première partie cintrée (3,6) du canal de transport est placée dans la direction latérale de telle sorte que le bord de la bande de bordure (12) faisant face au bord des films coïncide avec le bord des films.

3. Procédé suivant la revendication 1 ou 2, caractérisé en ce que le procédé est appliqué dans une machine à revêtir où les films (10, 11) sont appliqués au matériau en bande (9) avant que le matériau en bande (9) revêtu soit enroulé sur un cylindre enrouleur.

4. Dispositif pour effectuer le procédé suivant l'une quelconque des revendications précédentes, par lequel :
- le dispositif est conçu comme un canal de transport (3) à l'intérieur duquel passe la bande de bordure (12),
- le canal de transport est cintré et replié de façon à former un angle entre la bande de bordure (12) passant dans le canal de transport et la bande de bordure émergeant du canal de transport,
- le canal de transport est disposé de telle sorte qu'une première partie cintrée (3,6) de celui-ci coïncide avec la direction longitudinale de la bande et des films, et
- dans la direction latérale, le canal de transport est disposé de préférence de telle sorte que le bord faisant face au bord du film coïncide avec le bord du film.
